# EUROPEAN PATENT APPLICATION

(11) **EP 4 645 825 A1**
(43) Date of publication of application: **05.11.2025**
(21) Application number: 25173662.5
(22) Date of filing: 30.04.2025
(51) Int. Cl.: H04L 65/1016, H04L 65/1096, H04W 4/16, H04W 12/128

(54) **TECHNIQUES FOR IMPROVED CALL FORWARDING**

(30) Priority: 01.05.2024 US 202418652740
(71) Applicant: T-Mobile USA, Inc., Bellevue, WA 98006-1350 (US)
(72) Inventor: BADAR, Saqib, Bellevue 98006-1350 (US); BALAN, Harikishore Allu, Bellevue 98006-1350 (US)
(74) Representative: Suddaby, Mark Edward

(57) **Abstract**

Techniques are described herein for providing improved communication forwarding implementation for a user equipment. In embodiments, such techniques may be performed at least portion on one of an application server. Such techniques may comprise receiving, from a first user equipment, a request to implement a service in relation to the first user equipment, determining that the service relates to forwarding communications directed to the first user equipment to a second user equipment, providing, to the first user equipment, a notification including information about the service, receiving, from the first user equipment, a response to the notification, and making a determination about an implementation of the service based on the received response.

## Description

### BACKGROUND

Internet Protocol Multimedia Subsystem (IMS) is an architectural framework defined by the 3rd Generation Partnership Project (3GPP) for delivering Internet Protocol (IP) multimedia to user equipment (UE) of the IMS network. An IMS core network (sometimes referred to as the "IMS core", the "Core Network (CN)," or the "IM CN Subsystem") permits wireless and wireline devices to access IP multimedia, messaging, and voice applications and services. IMS allows for peer-to-peer communications, as well as client-to-server communications over an IP-based network.

In a typical IMS network, a number of IMS services can be requested to be implemented by a UE. Each such service may require interactions between a number of nodes in the network to provide a variety of services. For example, a UE can request a call forwarding service to be implemented in order to have messages directed to that UE forwarded to another UE.

Bad actors are actively engaged and creative in finding ways to get ahold of customer accounts and personal information. Their efforts are not merely limited to gaining access to email and/or account passwords. In many cases, service providers have implemented multi-factor authentication in which a user is authenticated based on communications provided to a known / verified UE. Hence, a user's UE may provide a pivotal role in user authentication for various services. To that end, many bad actors have found ways to have messages (e.g., multi-factor authentication messages) forwarded to a different UE rather than the to the UE of the user to be authenticated via the use of the call forwarding service.

### BRIEF DESCRIPTION OF THE DRAWINGS

The detailed description is set forth below with reference to the accompanying figures. In the figures, the left-most digit(s) of a reference number identifies the figure in which the reference number first appears. The use of the same reference numbers in different figures indicates similar or identical items. The systems depicted in the accompanying figures are not to scale and components within the figures may be depicted not to scale with each other.
FIG. 1 depicts a diagram illustrating an overview of an IMS network 100 having a number of nodes implemented in accordance with some embodiments.
FIG. 2 depicts a block diagram illustrating an exemplary process for implementing communication routing over an IMS network in accordance with embodiments.
FIG. 3 depicts a block diagram illustrating a first example of a communication forwarding process that implements fraud mitigation in an IMS network in accordance with embodiments.
FIG. 4 depicts a block diagram illustrating a second example of a communication forwarding process that implements fraud mitigation in an IMS network in accordance with embodiments.
FIG. 5 depicts a block diagram illustrating a third example of a communication forwarding process that implements fraud mitigation in an IMS network in accordance with embodiments.
FIG. 6 depicts an example notification that may be presented on a graphical user interface (GUI) of a UE in accordance with some embodiments.
FIG. 7 depicts a flow diagram illustrating an exemplary process for providing enhanced communication forwarding in an IMS network in accordance with at least some embodiments.
FIG. 8 shows an example computer architecture for an IMS node 800 capable of executing program components for implementing the functionality described above.

### DETAILED DESCRIPTION

This disclosure describes techniques and systems for providing improved communication forwarding service implementation. In embodiments, when an application server receives information about a forwarding service to be implemented, that application server may take one or more actions for mitigating potential fraud.

In embodiments, upon receiving a request to implement a service in relation to a first UE, a determination may be made that the service relates to implementing communication forwarding to redirect messages directed to the first UE to a second UE instead. In such cases, a notification may be provided to the first UE that clarifies that a request was submitted to implement a communication forwarding service. In some cases, an application server may not implement the communication forwarding service without first receiving a response to the notification. In some cases, a user of the first UE may need to be authenticated prior to implementing the communication forwarding service. In yet other cases, rather than submitting a request through a normal channel in an IMS network, an application executed on the first UE may manage such requests. In some of these cases, the application may require that a user of the first UE be directed to a website and/or that the user log into an account.

It should be noted that communication forwarding may refer to any process implemented for redirecting suitable communications (e.g., text messages, voice calls, etc.) directed to a first user equipment to a second user equipment instead. Such forwarding services may be performed by an application server that is implemented within a suitable network.

Embodiments of the disclosure provide for a number of advantages over conventional systems. For example, the implemented system allows for better detection and mitigation of fraudulent communication forwarding requests. As noted elsewhere, a bad actor may trick a user into submitting a forwarding request to have messages forward to a device that he or she controls. Once such a forwarding service has been implemented, the bad actor can gain access to the user's accounts that use multi-factor authentication by having the authentication messages forwarded to himself/herself. One prevalent way that bad actors attempt to trick users into implementing communication forwarding services involves the use of Man Machine Interface (MMI) code intended to simplify implementation of such services. A user may not readily recognize a MMI code representing a request to implement communication forwarding services when it is presented to him/her. Accordingly, a user may be tricked into implementing the forwarding service unintentionally (e.g., if the user is told that the code will result in better service, etc.). Embodiments of the system as disclosed herein allow for users to be provided with better information about the services that are to be implemented without compromising the user's ability to implement those services.

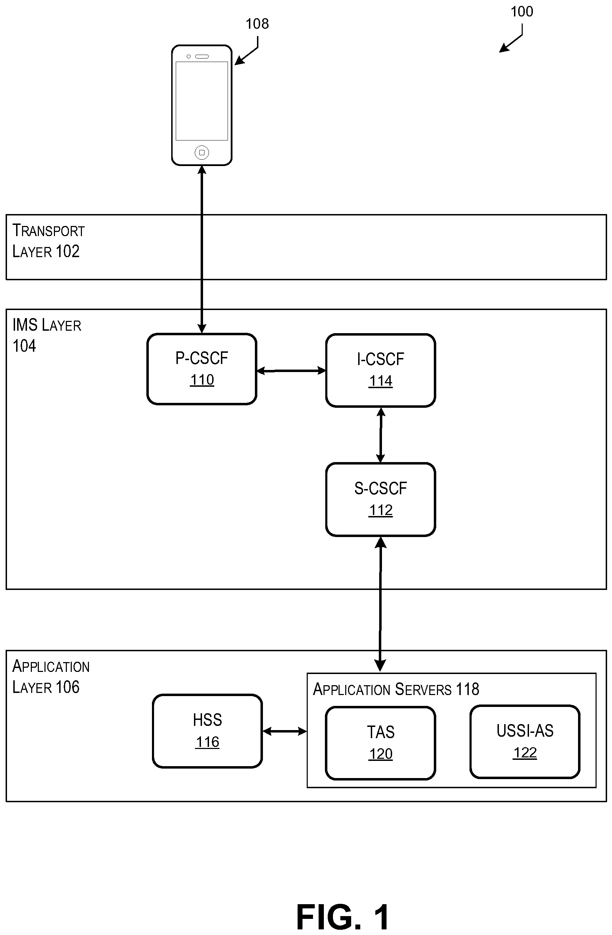

FIG. 1 depicts a diagram illustrating an overview of an IMS network 100 having a number of nodes implemented in accordance with some embodiments. In embodiments, the IMS network 100 may be made up of multiple layers, each of which includes a different set of nodes. For example, the IMS network may include at least a transport layer 102, an IMS layer 104, and an application layer 106.

A transport layer 102 may include any node (e.g., equipment) configured to provide access (e.g., ingress/egress) to the IMS network 100 for one or more user equipment (UE) 108. For example, a transport layer 102 may include a gateway device, such as a gateway that provides fixed access (e.g., digital subscriber line (DSL), cable modems, Ethernet, FTTx), mobile access (e.g., 5G NR, LTE, W-CDMA, CDMA2000, GSM, GPRS), and/or wireless access (e.g., WLAN, WiMAX).

An IMS layer 104 (also referred to as a control layer) may include any node configured to process SIP signaling packets within the IMS network 100. Such nodes may generally be referred to as Call Session Control Function (CSCF) nodes. CSCF nodes can be further distinguished based on their respective roles. For example, CSCF nodes may include a Proxy CSCF (P-CSCF), a Service CSCF (S-CSCF), and an Interrogating CSCF (I-CSCF). It is to be appreciated that the IMS network can include additional nodes that are not described herein such as nodes including, without limitation, an emergency CSCF (E-CSCF) node, a security gateway (SEG), a session border controller (SBC), and so on.

A P-CSCF node is a proxy device that acts as a first point of contact for UE 108 within the IMS Network. Each UE is assigned to a respective P-CSCF when it is registered with the IMS Network. A P-CSCF node can receive, via a communications interface, a Session Initiation Protocol (SIP) request from the UE 108 to be forwarded to a S-CSCF.

A S-CSCF node is the central nodes of the signaling plane and sits on the path of all signaling messages to/from a UE 108 that is assigned to it. There can be multiple S-CSCFs in the network for load distribution and high availability reasons. A S-CSCF is typically assigned to a user (or UE) by a Home Subscriber Server (HSS), when it's queried by the I-CSCF.

A S-CSCF node 112 may represent one of multiple available S-CSCF nodes that is chosen (or otherwise selected) for assignment to the UE 108. S-CSCF nodes, such as the S-CSCF node 112, are sometimes referred to as "Registrars," and the process of allocating Registrars among users who are registering for IMS-based services is sometimes referred to as finding a "home CSCF" for the UE 108.

A I-CSCF node 114 is a SIP function node that acts as a forwarding point for external devices. The I-CSCF node 114 queries the HSS to determine S-CSCF node / UE mapping and forwards SIP requests between the P-CSCF node 110 and the respective S-CSCF node 112.

An application layer 106 (also referred to as a service layer) may include one or more nodes capable of providing IMS-related services to the UE 108. In embodiments, the application layer 106 may include at least a Home Subscriber Server (HSS) 116 and a number of Application Servers (AS) 118. Note, however, that while the HSS 116 is described as being included in an application layer, either entity may be included in an IMS layer in some embodiments of an IMS network 100 or even outside of the IMS network.

The HSS 116 is typically a master user database that supports the IMS network nodes that handle the calls/sessions. It contains user profiles, performs authentication and authorization of the user, and can provide information about the physical location of a user. A user profile may be associated with each UE 108 and may contain information about the current user. Such information may be downloaded by the S-CSCF assigned to the user when the user is registered on the network. The S-CSCF may typically receive that information in a User-data Attribute Value Pair (AVP) format.

An AS 118 hosts and executes services, and interface with the S-CSCF using messages formatted using a SIP protocol. Depending on the actual service, the AS 118 can operate in SIP proxy mode, SIP UA (user agent) mode or SIP B2BUA mode. An AS can be located in the IMS network 100 or in an external third-party network. If located in the IMS network 100, it may be able to query, or otherwise interact with the HSS 116 (e.g., using a Diameter interface). In embodiments, the AS 118 manages an application that provides communication between two or more UEs (e.g., UE 108 and at least one other UE). For example, the AS 118 may manage an application that provides Voice over IP (VoIP) communications between UE devices. In some embodiments, the AS 118 may manage an application that provides communication forwarding services for a UE. During times in which forwarding is active for a UE 108, messages directed to that UE 108 may instead be sent to a second UE.

In embodiments, the AS 118 may be an application server that provides communication forwarding services. In such embodiments, the AS 118 may be configured to receive a request that originates from the UE 108 (e.g., as a SIP request via the S-CSCF node 112) to forward incoming communications to a second UE. In some cases, such a request may take the form of a MMI code. As would be recognized by one skilled in the art, an MMI code is typically a code that begins with star/hash (*#) that can be entered like a telephone number in order to obtain a variety of information as well to enable and disable various actions. Upon receiving a request for forwarding services in relation to a UE 108, the AS 118 may be configured to route messages directed to the UE 108 to a second UE as specified in the request for forwarding services.

The UE 108 may include any electronic device capable of interacting with the IMS network 100. In some non-limiting examples, the UE 108 may be a variety of devices including, for example: a mobile phone, a personal data assistant (PDA), or a mobile computer (e.g., a laptop, notebook, notepad, tablet, etc.) having mobile wireless data communication capability. The UE 108 may be configured to register for, and thereafter access and utilize, one or more IMS-based services via the IMS network 100. To this end, the UE 108 may be configured to transmit, via a radio access network (RAN), messages to the IMS network. For example, the UE 108 may transmit messages to the IMS network as part of an IMS registration procedure where the UE 108 is requesting to register for an IMS-based service.

In operation, the UE 108 may, upon registration with the IMS network 100, be assigned to a P-CSCF node 110 as well as a S-CSCF node 112. Communications from the UE 108 to an AS 118 of the IMS network 100 are then routed from the UE 108 to the P-CSCF node 110 and then to the S-CSCF node 112 (through forwarding by the I-CSCF node 114) and subsequently to the AS 118. Conversely, communications from an AS 118 of the IMS network 100 to the UE 108 are routed from the AS 118 to the S-CSCF node 112 and then to the P-CSCF node 110 and subsequently to the UE 108.

During operation, services may be initiated between UEs via an application managed by, and executed on, an AS 118. In such cases, each of the UEs involved in the service session may be independently connected to the AS 118 over different nodes of an IMS network 100 distributed over a geographic area. In such cases, the two UEs may be geographically remote, such that they are otherwise unable to establish a direct communication session. When a communication session is initiated via a service offered by an AS 118, communications between the two UEs is routed through that AS 118.

In embodiments, the Application servers 118 may include multiple different application servers. In some cases, the AS 118 may include at least a telephony application server (TAS) 120. In some cases, the AS 118 may include at least an an Unstructured Supplementary Service Data implemented on IMS (USSI) application server 122. A USSI server may provide USSI IMS services to a UE.

In accordance with various embodiments described herein, the terms "user equipment (UE)," "wireless communication device," "wireless device," "communication device," "mobile device," and "client device," may be used interchangeably herein to describe any UE (e.g., the UE 108) that is capable of transmitting/receiving data over the IMS network, perhaps in combination with other networks. A users can utilize the UE 108 to communicate with other users and associated UEs via the IMS network. For example, a service provider may offer multimedia telephony services that allow a subscribed user to call or message other users via the IMS network using his/her UE 108. A user can also utilize the UE 108 to receive, provide, or otherwise interact with various different IMS-based services by accessing the IMS network. In this manner, an operator of the IMS network may offer any type of IMS-based service, such as, telephony services, emergency services (e.g., E911), gaming services, instant messaging services, presence services, video conferencing services, social networking and sharing services, location-based services, push-to-talk services, and so on.

Furthermore, the IMS network that includes the IMS nodes 110-114 may enable peer-to-peer, client-to-client, and/or client-to-server, communications over wired and/or wireless networks using any suitable wireless communications/data technology, protocol, or standard, such as Global System for Mobile Communications (GSM), Time Division Multiple Access (TDMA), Universal Mobile Telecommunications System (UMTS), Evolution-Data Optimized (EVDO), Long Term Evolution (LTE), Advanced LTE (LTE+), Generic Access Network (GAN), Unlicensed Mobile Access (UMA), Code Division Multiple Access (CDMA), Orthogonal Frequency Division Multiple Access (OFDM), General Packet Radio Service (GPRS), Enhanced Data GSM Environment (EDGE), Advanced Mobile Phone System (AMPS), High Speed Packet Access (HSPA), evolved HSPA (HSPA+), Voice over IP (VoIP), Voice over LTE (VoLTE), IEEE 802.1x protocols, WiMAX, Wi-Fi, Data Over Cable Service Interface Specification (DOCSIS), digital subscriber line (DSL), and/or any future IP-based network technology or evolution of an existing IP-based network technology.

The IMS network 100 of FIG. 1 may be maintained and/or operated by one or more service providers, such as one or more wireless carriers ("operators"), that provide mobile IMS-based services to users (sometimes called "subscribers") who are associated with UEs, such as the UE 108. The IMS network may represent any type of SIP-based network that is configured to handle/process SIP signaling packets or messages. SIP is a signaling protocol that can be used to establish, modify, and terminate multimedia sessions (e.g., a multimedia telephony call) over packet networks, and to authenticate access to IMS-based services. Individual nodes of the IMS nodes 110-114 of FIG. 1 can also be configured to transmit data to/from the HSS 116 using Diameter protocol over a Diameter (Cx) interface. Diameter protocol is defined by the Internet Engineering Task Force (IETF) in RFC 6733.

For clarity, a certain number of components are shown in FIG. 1. It is understood, however, that embodiments of the disclosure may include more than one of each component. In addition, some embodiments of the disclosure may include fewer than or greater than all of the components shown in FIG. 1. In addition, the components in FIG. 1 may communicate via any suitable communication medium (including the Internet), using any suitable communication protocol.

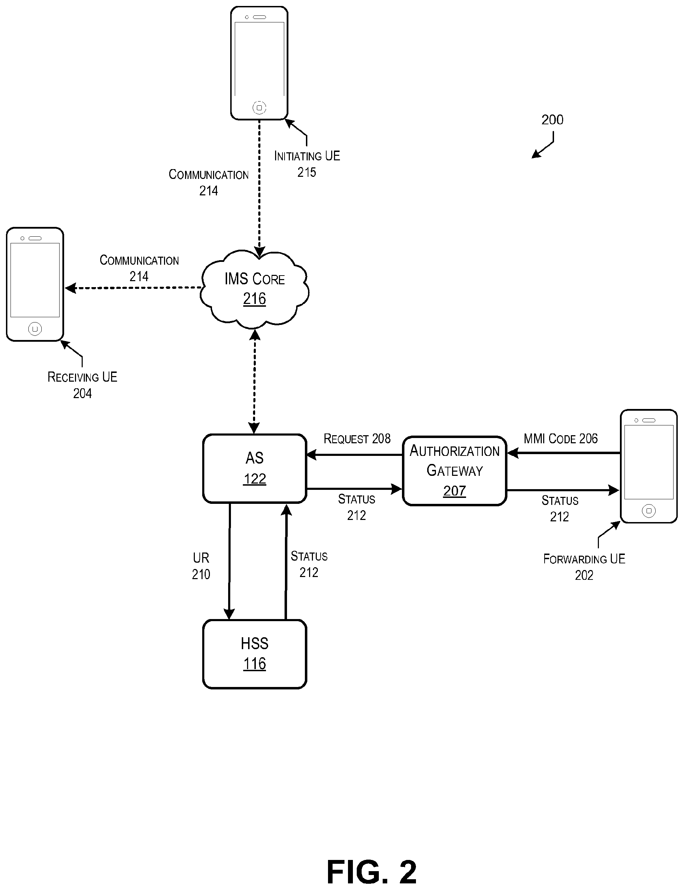

FIG. 2 depicts a block diagram illustrating an exemplary process for implementing communication routing over an IMS network in accordance with embodiments. The process 200 may be performed by one or more devices operating in an IMS network of the disclosed system in order to set up communication forwarding, by forwarding messages directed to a forwarding UE 202 to a receiving UE 204.

As noted elsewhere, bad actors may attempt to gain access to an account associated with a user of a UE. When multi-factor authentication is used to secure the account, the bad actor may attempt to intercept messages used in multi-factor authentication. To accomplish this, the bad actor may attempt to trick the user into forwarding those messages to a UE that is controlled by the bad actor. In some cases, the bad actor may achieve this by tricking the user into submitting a forwarding request on his or her UE. This can become especially problematic given the use of MMI codes, which can be used to quickly set up call forwarding services without detection by a user that is not technically savvy. For example, a scam operator may send a short messaging system (SMS) message to a user on his or her UE which suggests that an attached link would improve the UE's service. In this example, upon selection of the attached link, the UE may be caused to generate a MMI code that is sent to the application server to set up communication forwarding.

In embodiments, a first UE (e.g., forwarding UE 202) may submit a request (e.g., in the form of an MMI code 206) to the authorization gateway 207. An authorization gateway 207 may be any suitable device configured to provide ingress/egress for UEs to access one or more application servers. In some embodiments, the authorization gateway 207 may be a USSI gateway that enables a UE to access USSI services provided by the AS 122. As noted elsewhere, AS 122 may be a USSI application server as described in relation to FIG. 1 above.

Upon receiving a MMI code 206, an authorization gateway 207 (or another suitable gateway device) may translate that MMI code 206 into a service to be implemented in relation to the UE 202. For example, the MMI code 206 may correspond to a request to initiate a call/communication forwarding service. In this example, the authorization gateway 207may identify an AS 122 associated with the requested call/communication forwarding service based on the MMI code 206. The authorization gateway 207 may subsequently generate a request 208 that is provided to the AS 122 in relation to the indicated service in the received MMI code 206.

Upon receiving a request 208 related to implementing a call/message forwarding service, the AS 122 may be configured to implement such a service. In some cases, the AS 122 may identify both the forwarding UE 202 and the receiving UE 204 and may implement a rule to cause messages directed to the forwarding UE 202 to be sent to the receiving UE 204 instead. The AS 122 may indicate one or more conditions under which the call/message forwarding service should be canceled/ended. For example, the AS 122 may store an indication of a date/time at which the forwarding service should be ended. In some cases, the AS 122 may indicate certain types of communications that should be forwarded (e.g., SMS messages, voice calls, etc.).

In some cases, the AS 122 may send an update request (UR) (e.g., a profile update request (PUR)) message 210 to the HSS 116 indicating that messages directed to the forwarding UE 202 should now be forwarded to the receiving UE 204. The HSS 116 may update a status associated with the account upon receiving such a message. In some cases, the HSS 116 provides a response to the AS 122 that indicates a status 212. The AS 122 may forward the indication of the status 212 to the authorization gateway 207, which may then forward it to the forwarding UE 202.

Once the call/message forwarding service has been implemented as requested, a communication 214 may be received at the IMS core 216 from an initiating UE 215. The AS 122 may determine that the communication 214 is directed to the forwarding UE 202 based on an indication of an identifier for the forwarding UE 202 included in the communication 214 (e.g., within a header). When routing the communication 214, the IMS core 216 may obtain information from the AS 122 indicating that the communication should be routed to the receiving UE 204 based on the implemented forwarding request. In some cases, the AS 122 may consult the HSS 116 each time that it receives a communication 214 that is directed to a UE in order to determine a routing path for that communication 214. When routing the communication 214, the AS 122 may provide that communication to a S-CSCF node associated with the UE to which the communication is to be routed.

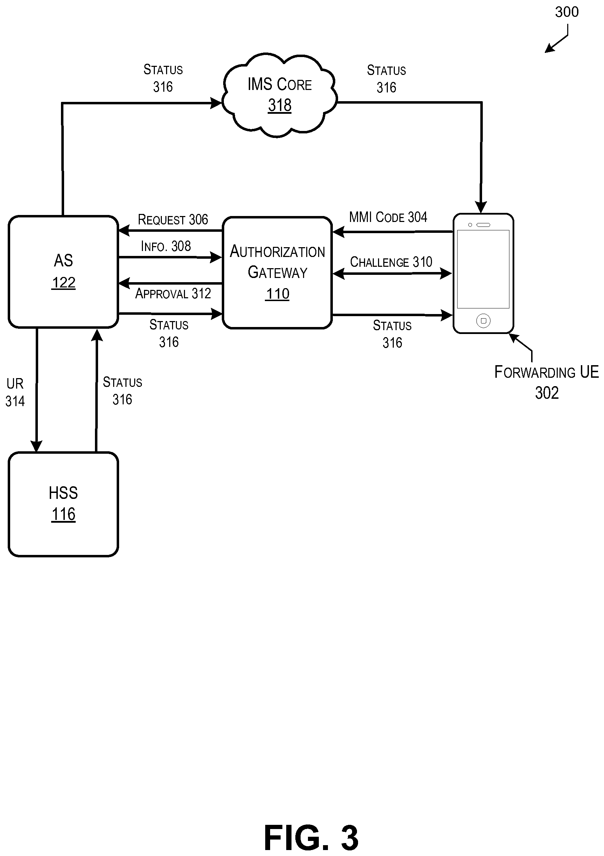

FIG. 3 depicts a block diagram illustrating a first example of a communication forwarding process that implements fraud mitigation in an IMS network in accordance with embodiments. The process 300 may be performed by one or more devices operating in an IMS network of the disclosed system.

In embodiments, a forwarding UE 302 may submit an MMI code 304 to the authorization gateway 207. Upon receiving a MMI code 304, an authorization gateway 207 (or another suitable gateway device) may translate that MMI code 304 into an indication of service to be implemented in relation to the forwarding UE 302. The authorization gateway 207 may then identify an AS 122 associated with the requested service based on the MMI code 304. The authorization gateway 207 may subsequently generate a request 306 that is provided to the AS 122 to implement the service related to the received MMI code 304.

In embodiments, when the AS 122 receives a request to implement a communication forwarding service, the AS 122 may initially seek confirmation of the requested service prior to implementing it. This may involve providing information 308 back to the authorization gateway 207 to be used in obtaining confirmation. In some cases, the information 308 may include details related to the service to be implemented that can be presented to the forwarding UE 302 to be displayed to a user. In some embodiments, the information 308 may further include one or more credentials (e.g., login credentials) associated with the UE that can be used to authenticate a user of the UE.

Upon receiving the information 308, the authorization gateway 207 may generate a challenge 310 to be presented to the forwarding UE 302. In such cases, the forwarding UE 302 may display a notification related to the challenge 310 on its graphical user interface (GUI). The challenge 310 may require that a user of the forwarding UE 302 provide input indicating an intent to implement a forwarding service. For example, the notification related to the challenge 310 that is displayed on the GUI may include a number of interactive elements (e.g., buttons) that can be selected by a user in order to provide input related to his or her intent. In some cases, a user of the UE 302 may be required to enter login credentials (e.g., a login and/or password) in order to be authenticated for the challenge 310.

Once input received from the user is provided by the UE 302 to the authorization gateway 207, the authorization gateway 207 may make a determination as to whether the challenge 310 has been satisfied. Upon determining that the challenge 310 has not been satisfied (e.g., a user intent was not to implement the forwarding service and/or the user is not able to provide requested credentials), the authorization gateway 207 may choose to terminate the implementation of the forwarding service. In some cases, the authorization gateway 207 may not provide a response to the AS 122, in which the lack of response may itself be an indication that the service is not to be implemented, or it may provide an indication that the service should not be implemented. Upon determining that the challenge 310 has been satisfied, the authorization gateway 207 may provide a response to the information 308 in the form of an approval 312.

Once the AS 122 has confirmed that a user of the UE has intended to implement the service, the AS 122 may send an update request (UR) message 314 to the HSS 116 indicating that messages directed to the forwarding UE 302 should now be forwarded to a different UE. The HSS 116 may update a status associated with the account upon receiving such a message. In some cases, the HSS 116 provides a response to the AS 122 that indicates a status 316. The AS 122 may forward the indication of the status 316 to the authorization gateway 207, which may then forward it to the forwarding UE 302.

In some embodiments, the indication of the status 316 may be provided by the AS 122 to the forwarding UE 302 via a separate channel. For example, rather than providing the indication of the status 316 to the authorization gateway 207, the indication of the status 316 may be provided to an IMS core 318, which may then forward the indication of the status 316 to the forwarding UE 302 (e.g., via a respective P-CSCF node).

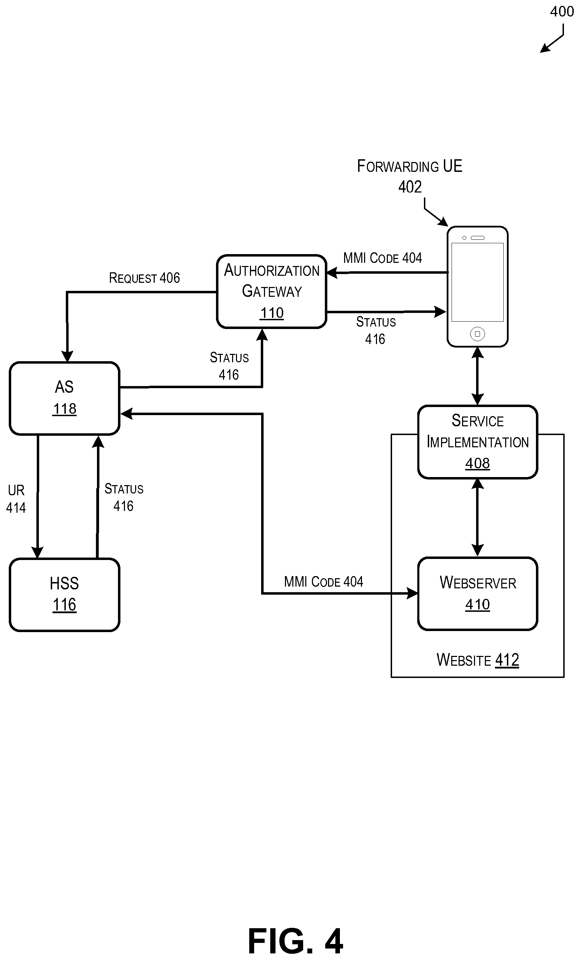

FIG. 4 depicts a block diagram illustrating a second example of a communication forwarding process that implements fraud mitigation in an IMS network in accordance with embodiments. The process 400 may be performed by one or more devices operating in an IMS network of the disclosed system.

In embodiments, a forwarding UE 402 may receive input from a user to implement a service. In some cases, this may involve receiving a request to relay an MMI code 404 to the authorization gateway 207. Rather than transmitting the MMI code 404 to the authorization gateway 207 right away, the forwarding UE 402 may be configured to discern a user intent. Instead, upon detecting input that is determined to be a request to implement a service (e.g., the input is an MMI code 404), the forwarding UE 402 may execute a service implementation module 408 implemented on it.

In embodiments, the service implementation module 408 may be configured to ascertain user intent and/or authenticate the user. In some cases, the service implementation module 408 may be configured to connect to a third-party computing device, such as a webserver 410 that is operated in relation to the IMS network. In some cases, the service implementation module 408 may open a browser application in order to access a website 412 managed by the webserver 410.

In some cases, a user of the forwarding UE 402 is asked to provide login credentials in order to confirm that the user is authorized to submit requests. In some cases, the forwarding UE 402, upon accessing the website 412, is caused to display information (e.g., a notification) related to the requested service that is to be implemented along with a request to approve the requested service. In some cases, the notification may include specific details about the requested service, such as a phone number that messages will be forwarded to provided that the request is approved.

In some embodiments, a webserver 410 may be in communication with a AS 122. For example, the webserver 410 may maintain the website 412 related to a service provider (e.g., a service provider operating the IMS network) and information provided by a user to the website 412 via the UE may be relayed between the webserver 410 and the AS 122. In such embodiments, a user's request to implement a service may be relayed directly from the webserver 410 to the AS 122.

In some embodiments, once the service implementation module 408 has ascertained that the user's intent is to implement the requested service (and in some cases that the user has been authenticated), the forwarding UE 402 may be configured to submit an MMI code 404 to the authorization gateway 207. Upon receiving a MMI code 404, an authorization gateway 207 may translate that MMI code 404 into an indication of service to be implemented in relation to the forwarding UE 402. The authorization gateway 207may then identify an AS 122 associated with the requested service based on the MMI code 404, and may subsequently generate a request 406 that is provided directly to the AS 122 to implement the service related to the received MMI code 404.

As noted elsewhere, the AS 122 may send an update request (UR) message 414 to the HSS 116 indicating that messages directed to the forwarding UE 402 should now be forwarded to a different UE. The HSS 116 may update a status associated with the account upon receiving such a message. In some cases, the HSS 116 provides a response to the AS 122 that indicates a status 416. The AS 122 may forward the indication of the status 416 to the authorization gateway 207, which may then forward it to the forwarding UE 402.

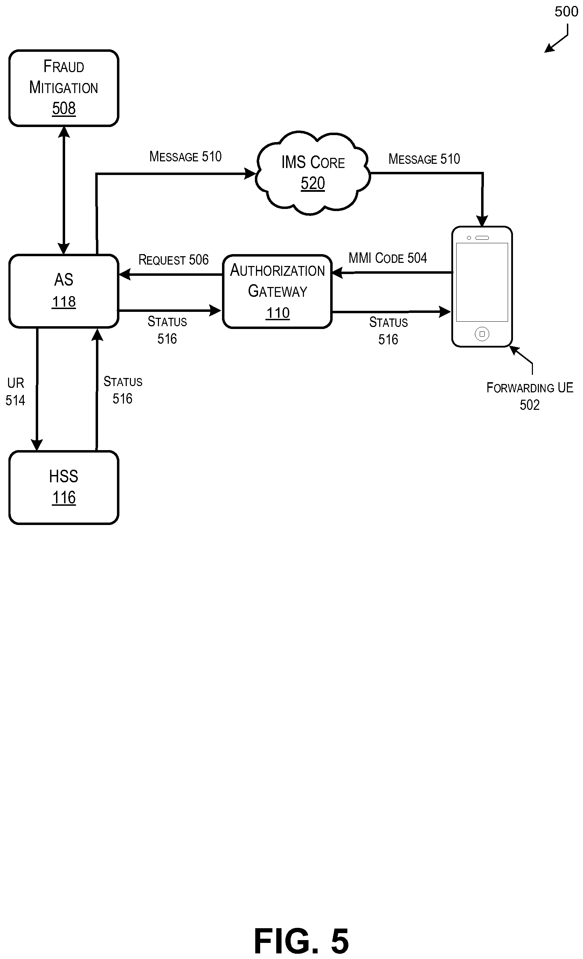

FIG. 5 depicts a block diagram illustrating a third example of a communication forwarding process that implements fraud mitigation in an IMS network in accordance with embodiments. The process 500 may be performed by one or more devices operating in an IMS network of the disclosed system.

In embodiments, a forwarding UE 502 may submit an MMI code 504 to the authorization gateway 207. Upon receiving a MMI code 504, a P authorization gateway 207 (or another suitable gateway device) may translate that MMI code 504 into an indication of service to be implemented in relation to the forwarding UE 502. The authorization gateway 207 may then identify an AS 122 associated with the requested service based on the MMI code 504. The authorization gateway 207 may subsequently generate a request 506 that is provided to the AS 122 to implement the service related to the received MMI code 504.

The AS 122, upon receiving the request 506, may submit at least a portion of the information included in that request to a fraud mitigation module 508. In some cases, the fraud mitigation module 508 may be a set of computer-executable instructions that, when executed, is configured to determine a likelihood that the request 506 relates to a fraud incident. For example, information about known fraudulent activities may be stored and used to identify patterns that correspond to such fraud. In some cases, a database may be maintained in relation to identifiers (e.g., phone numbers) associated with known fraudulent activity. In such cases, the information included in the request 506 may be compared to the patterns/identifiers associated with the known fraudulent activity to determine a likelihood that the current request 506 is the result of fraudulent activity. In another example, phone numbers for the forwarded UE may be categorized as potentially associated with scammers. By way of illustration, they may be associated with known (e.g., previously reported) fraudulent activity. In such cases, when a phone number is determined to be categorized in such a manner, the AS 122 may be configured to reject the request to set up communication forwarding.

In some embodiments, the fraud mitigation module 508 may use any suitable techniques for determining a likelihood that the request for a service to be implemented is associated with fraud. In some cases, such a likelihood may be represented as a percentage or ratio. In some cases, the fraud mitigation module 508 may use one or more machine learning models that have been trained to correlate various patterns detected in relation to a request for a service with known (e.g., historical) fraudulent requests for service.

Upon determining that the request to implement the service is likely fraudulent (e.g., a likelihood of fraud is greater than a threshold likelihood value), the AS 122 may be configured to prevent the implementation of the requested service. In some cases, the AS 122 may provide a message 510 back to the forwarding UE 502 indicating that the requested service has not been implemented. In some cases, the message 510 may include information about the determined likelihood of fraud and/or information clarifying the requested service. In some cases, the message 510 may provide a clear description of the service that was/was not implemented in order to ensure that a user of the forwarding UE 502 understands what has been requested.

It should be noted that the fraud mitigation module 508 may be included within the IMS network or outside of the IMS network. For example, the fraud mitigation module 508 may be implemented within the AS 122 or within a separate application server. In another example, the fraud mitigation module 508 may be implemented within a server operated by a third-party service provider outside of the IMS network.

Once the AS 122 has determined that the request 506 is likely not related to fraudulent activity, the AS 122 may send an update request (UR) message 514 to the HSS 116 indicating that messages directed to the forwarding UE 502 should now be forwarded to a different UE. The HSS 116 may update a status associated with the account upon receiving such a message. In some cases, the HSS 116 provides a response to the AS 122 that indicates a status 516. The AS 122 may forward the indication of the status 516 to the authorization gateway 207, which may then forward it to the forwarding UE 502.

In some embodiments, the indication of the message 510 may be provided by the AS 122 to the forwarding UE 502 via a separate channel. For example, rather than providing the message 510 to the authorization gateway 207, the message 510 may be provided to an IMS core 520, which may then forward the message 510 to the forwarding UE 502 (e.g., via a respective P-CSCF node).

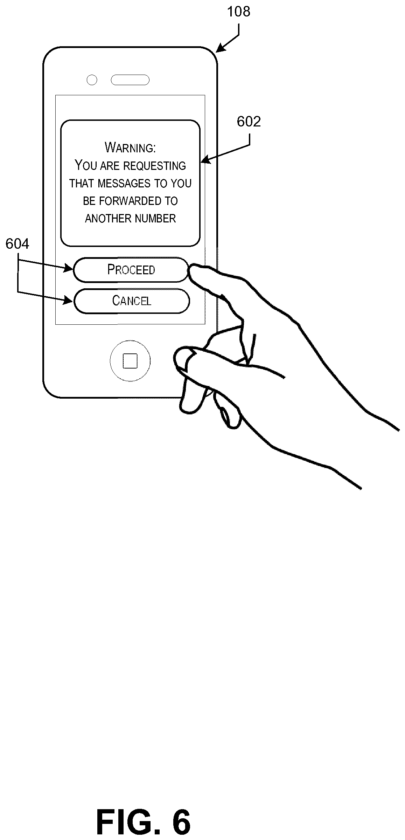

FIG. 6 depicts an example notification that may be presented on a graphical user interface (GUI) of a UE in accordance with some embodiments. A GUI of a UE 108 may be implemented to depict one or more graphical illustrations on a display of that UE. The UE 108 may be an example of a UE 108 as described in relation to FIG. 1.

As noted elsewhere, an application server may provide a notification 602 or other suitable message to a UE 108 in response to receiving a request to implement a service in relation to that UE 108. Such a notification 602 may be provided to the UE 108 regardless of whether the requested service has been implemented (or in the alternatively declined to be implemented).

In some cases, the notification may include an indication of one or more details about the requested service. In some cases, the notification 602 may be accompanied by one or more interactive elements 604 that can be interacted with on the GUI by a user in order to provide input. For example, the user may be able to select from two buttons (an example of an interactive element 604) that indicate options such as "Proceed" or "Cancel." This allows the user to indicate his or her intent with respect to the requested service. The input collected via a selection of an interactive element 604 by a user of the UE 108 may be provided to the AS 122 to be used in determining whether or not the requested service should be implemented.

In some embodiments, the notification 602 may be accompanied by a challenge (e.g., challenge 310 as described in relation to FIG. 3) in order to authenticate the user. In embodiments, such a challenge may have a text input field within which a user can enter credentials (e.g., a login and/or password) that can be used to verify the user's authenticity. The results of such a challenge (e.g., success or failure) can be relayed to the AS 122 to be used in determining whether the requested service should be implemented.

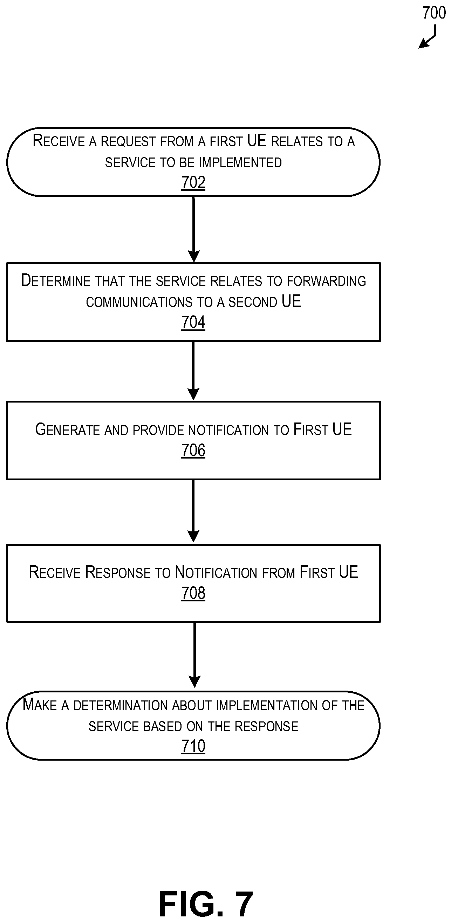

FIG. 7 depicts a flow diagram illustrating an exemplary process for providing enhanced communication forwarding in an IMS network in accordance with at least some embodiments. In embodiments, the process 700 as depicted in FIG. 7 may be performed by an application server as implemented within an IMS network.

At 702, the process 700 may involve receiving a request from a first UE for a service to be implemented in relation to that UE. In embodiments, the request to implement the service is identified based on being formatted as a Man Machine Interface (MMI) code. For example, the request may include a string of text that is transmitted to the IMS network that begins with a star/hash (*#) followed by a numeric portion. In such cases, a determination that the service relates to forwarding communications may be made based on a numeric portion of the MMI code.

In some embodiments, when a user attempts to send a request (e.g., an MMI code) to the IMS network in order to implement a service, an application on that UE may be executed. In such cases, the request may be prevented from being sent except by the application. For example, upon entering a MMI code, an application on the UE may execute. That application may cause a display of the UE to present a notification that includes information about the requested service as well as one or more interactive elements (e.g., buttons, drop-down menus, etc.) that can be selected by a user of the UE in order to provide user input in response to the notification. In some cases, the application may require a user to provide access credentials (e.g., login and/or password) in order to submit a request. In these embodiments, the request may be submitted once the application has received a response from the user that includes user input indicating an intent to implement the requested service.

In some embodiments, the application may be a browser application that causes a website associated with the IMS network to be accessed by the UE. In such cases, the website (which may be maintained by a webserver associated with the IMS network) may present information to the UE related to an account for that UE.

At 704, the process 700 may involve determining that the service relates to forwarding communications directed to the first UE to a second UE instead. As noted above, when the request is formatted as a MMI code, the service related to that request may be determined from a numeric portion of the MMI code. In some cases, an authorization gateway (or other suitable device in the network) may maintain a mapping of services to various MMI codes, such that the device is able to identify a service (and in some cases an application server) associated with the request.

In some embodiments, the process 700 may further involve determining a likelihood that the request is fraudulent. For example, one or more trained machine learning models may be used to determine a likelihood that the user did not intend to implement a communication forwarding service. In such cases, a notification may be provided to the UE if a determined likelihood (e.g., represented as a percentage or ratio) is greater than some threshold likelihood value.

At 706, the process 700 may involve providing a notification to the first UE. In embodiments, the notification is routed to the authorization gateway (e.g., a USSI gateway) to be relayed to the UE. In embodiments, the notification is routed to a S-CSCF node associated with the UE. In such embodiments, the S-CSCF node relays the notification to the P-CSCF node associated with the UE, which then relays it to the UE. The notification provided to the UE may include any suitable information about the service to be implemented. In some cases, the notification may include at least an indication that the service relates to a communication forwarding service as well as a UE identifier (e.g., a phone number) associated with the UE to which the communications will be forwarded (provided that the service is implemented).

At 708, the process 700 may involve receiving a response to the notification provided to the first UE. In some embodiments, the response may include user input that indicates an intent to implement the service. For example, in the scenario in which the notification included one or more interactive elements, the response may include a selection of one or more of those interactive elements by a user of the UE.

At 710, the process 700 may involve making a determination about the implementation of the service based on the received response. In embodiments, where the response indicates an intent to implement the forwarding service, the application server may move forward with updating an account associated with the UE such that the service is implemented. However, in embodiments where the response indicates no intent to implement the forwarding service, the application server may terminate updating of the account.

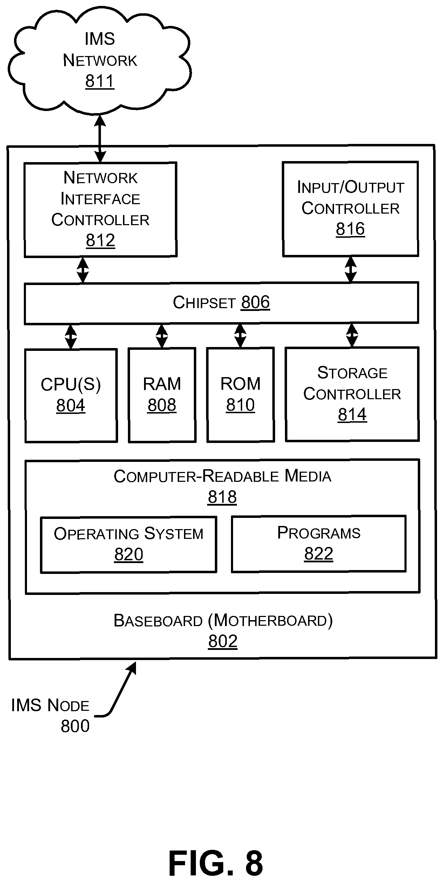

FIG. 8 shows an example computer architecture for an IMS node 800 capable of executing program components for implementing the functionality described above. The computer architecture shown in FIG. 8 illustrates a conventional server computer, workstation, desktop computer, laptop, tablet, network appliance, e-reader, smartphone, or other computing device, and can be utilized to execute any of the software components presented herein. The IMS node 800 may, in some examples, correspond to a physical server as described herein, and may comprise networked devices such as servers, switches, routers, hubs, bridges, gateways, modems, repeaters, access points, etc.

The IMS node 800 includes a baseboard 802, or "motherboard," which is a printed circuit board to which a multitude of components or devices can be connected by way of a system bus or other electrical communication paths. In one illustrative configuration, one or more central processing units ("CPUs") 804 operate in conjunction with a chipset 806. The CPUs 804 can be standard programmable processors that perform arithmetic and logical operations necessary for the operation of the IMS node 800.

The CPUs 804 perform operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

The chipset 806 provides an interface between the CPUs 804 and the remainder of the components and devices on the baseboard 802. The chipset 806 can provide an interface to a RAM 808, used as the main memory in the IMS node 800. The chipset 806 can further provide an interface to a computer-readable storage medium such as a read-only memory ("ROM") 810 or non-volatile RAM ("NVRAM") for storing basic routines that help to startup the IMS node 800 and to transfer information between the various components and devices. The ROM 810 or NVRAM can also store other software components necessary for the operation of the IMS node 800 in accordance with the configurations described herein.

The IMS node 800 can operate in a networked environment using logical connections to remote computing devices and computer systems through a network, such as the network 811 (which may be an IMS network). The chipset 806 can include functionality for providing network connectivity through a NIC 812, such as a gigabit Ethernet adapter. The NIC 812 is capable of connecting the IMS node 800 to other computing devices over the network 811. It should be appreciated that multiple NICs 812 can be present in the IMS node 800, connecting the computer to other types of networks and remote computer systems.

The IMS node 800 can be connected to a storage device 818 that provides non-volatile storage for the computer. The storage device 818 can store an operating system 820, programs 822, and data, which have been described in greater detail herein. The storage device 818 can be connected to the IMS node 800 through a storage controller 814 connected to the chipset 806. The storage device 818 can consist of one or more physical storage units. The storage controller 814 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

The IMS node 800 can store data on the storage device 818 by transforming the physical state of the physical storage units to reflect the information being stored. The specific transformation of physical state can depend on various factors, in different embodiments of this description. Examples of such factors can include, but are not limited to, the technology used to implement the physical storage units, whether the storage device 818 is characterized as primary or secondary storage, and the like.

For example, the IMS node 800 can store information to the storage device 818 by issuing instructions through the storage controller 814 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The IMS node 800 can further read information from the storage device 818 by detecting the physical states or characteristics of one or more particular locations within the physical storage units.

In addition to the mass storage device 818 described above, the IMS node 800 can have access to other computer-readable storage media to store and retrieve information, such as program modules, data structures, or other data. It should be appreciated by those skilled in the art that computer-readable storage media is any available media that provides for the non-transitory storage of data and that can be accessed by the IMS node 800. In some examples, the operations performed by devices as described herein may be supported by one or more devices similar to IMS node 800. Stated otherwise, some or all of the operations performed by an edge device, and/or any components included therein, may be performed by one or more IMS node 800 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage device 818 can store an operating system 820 utilized to control the operation of the IMS node 800. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage device 818 can store other system or application programs and data utilized by the IMS node 800.

In one embodiment, the storage device 818 or other computer-readable storage media is encoded with computer-executable instructions which, when loaded into the IMS node 800, transform the computer from a general-purpose computing system into a special-purpose computer capable of implementing the embodiments described herein. These computer-executable instructions transform the IMS node 800 by specifying how the CPUs 804 transition between states, as described above. According to one embodiment, the IMS node 800 has access to computer-readable storage media storing computer-executable instructions which, when executed by the IMS node 800, perform the various processes described above with regard to the other figures. The IMS node 800 can also include computer-readable storage media having instructions stored thereupon for performing any of the other computer-implemented operations described herein.

The IMS node 800 can also include one or more input/output controllers 816 for receiving and processing input from a number of input devices, such as a keyboard, a mouse, a touchpad, a touch screen, an electronic stylus, or other type of input device. Similarly, an input/output controller 816 can provide output to a display, such as a computer monitor, a flat-panel display, a digital projector, a printer, or other type of output device. It will be appreciated that the IMS node 800 might not include all of the components shown in FIG. 8, can include other components that are not explicitly shown in FIG. 8, or might utilize an architecture completely different than that shown in FIG. 8.

As described herein, the IMS node 800 may include one or more hardware processors (e.g., CPUs 804) (processors) configured to execute one or more stored instructions. The processor(s) may comprise one or more cores. Further, the IMS node 800 may include one or more network interfaces configured to provide communications between the IMS node 800 and other devices, such as the communications described herein as being performed by an edge device. The network interfaces may include devices configured to couple to personal area networks (PANs), wired and wireless local area networks (LANs), wired and wireless wide area networks (WANs), and so forth. More specifically, the network interfaces include the mechanical, electrical, and signaling circuitry for communicating data over physical links coupled to the network 811. The network interfaces may be configured to transmit and/or receive data using a variety of different communication protocols. Notably, a physical network interface may also be used to implement one or more virtual network interfaces, such as for virtual private network (VPN) access, known to those skilled in the art. In one example, the network interfaces may include devices compatible with Ethernet, Wi-Fi^{™}, and so forth.

The programs 822 may comprise any type of programs or processes to perform the techniques described in this disclosure. The programs 822 may comprise any type of program that cause the IMS node 800 to perform techniques for communicating with other devices using any type of protocol or standard usable for determining connectivity.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while processes may be shown and/or described separately, those skilled in the art will appreciate that processes may be routines or modules within other processes.

In various embodiments, as detailed further below, IMS node 800 may also include computer executable instructions that, when executed by processor(s), utilize machine learning. In general, machine learning is concerned with the design and the development of techniques that take as input empirical data (such as network statistics and performance indicators) and recognize complex patterns in these data. One very common pattern among machine learning techniques is the use of an underlying model M, whose parameters are optimized for minimizing the cost function associated to M, given the input data. For instance, in the context of classification, the model M may be a straight line that separates the data into two classes (e.g., labels) such that M = a * x + b * y + c and the cost function would be the number of misclassified points. The learning process then operates by adjusting the parameters a, b, c such that the number of misclassified points is minimal. After this optimization phase (or learning phase), the model M can be used very easily to classify new data points. Often, M is a statistical model, and the cost function is inversely proportional to the likelihood of M, given the input data.

In various embodiments, the IMS node 800 may employ one or more supervised, unsupervised, or semi-supervised machine learning models. Generally, supervised learning entails the use of a training set of data, as noted above, that is used to train the model to apply labels to the input data. For example, the training data may include sample telemetry that has been labeled as normal or anomalous. On the other end of the spectrum are unsupervised techniques that do not require a training set of labels. Notably, while a supervised learning model may look for previously seen patterns that have been labeled as such, an unsupervised model may instead look to whether there are sudden changes or patterns in the behavior of the metrics. Semi-supervised learning models take a middle ground approach that uses a greatly reduced set of labeled training data.

Example machine learning techniques that path evaluation process can employ may include, but are not limited to, nearest neighbor (NN) techniques (e.g., k-NN models, replicator NN models, etc.), statistical techniques (e.g., Bayesian networks, etc.), clustering techniques (e.g., k-means, mean-shift, etc.), neural networks (e.g., reservoir networks, artificial neural networks, etc.), support vector machines (SVMs), logistic or other regression, Markov models or chains, principal component analysis (PCA) (e.g., for linear models), singular value decomposition (SVD), multi-layer perceptron (MLP) artificial neural networks (ANNs) (e.g., for non-linear models), replicating reservoir networks (e.g., for non-linear models, typically for time series), random forest classification, or the like.

The performance of a machine learning model can be evaluated in a number of ways based on the number of true positives, false positives, true negatives, and/or false negatives of the model. For example, the false positives of the model may refer to the number of times the model incorrectly predicted an undesirable behavior of a path, such as its delay, packet loss, and/or jitter exceeding one or more thresholds. Conversely, the false negatives of the model may refer to the number of times the model incorrectly predicted acceptable path behavior. True negatives and positives may refer to the number of times the model correctly predicted whether the behavior of the path will be acceptable or unacceptable, respectively. Related to these measurements are the concepts of recall and precision. Generally, recall refers to the ratio of true positives to the sum of true positives and false negatives, which quantifies the sensitivity of the model. Similarly, precision refers to the ratio of true positives the sum of true and false positives.

While the invention is described with respect to the specific examples, it is to be understood that the scope of the invention is not limited to these specific examples. Since other modifications and changes varied to fit particular operating requirements and environments will be apparent to those skilled in the art, the invention is not considered limited to the example chosen for purposes of disclosure and covers all changes and modifications which do not constitute departures from the true spirit and scope of this invention.

Although the application describes embodiments having specific structural features and/or methodological acts, it is to be understood that the claims are not necessarily limited to the specific features or acts described. Rather, the specific features and acts are merely illustrative some embodiments that fall within the scope of the claims of the application.

## Claims

1. A method comprising:
receiving, from a first user equipment, a request to implement a service in relation to the first user equipment;
determining that the service relates to forwarding communications directed to the first user equipment to a second user equipment;
providing, to the first user equipment, a notification including information about the service;
receiving, from the first user equipment, a response to the notification; and
making a determination about an implementation of the service based on the received response.

2. The method of claim 1, wherein the request to implement the service is formatted as a Man Machine Interface, MMI, code and wherein the determining that the service relates to forwarding communications is based on a numeric portion of the MMI code.

3. The method of claim 1 or 2, wherein the notification comprises a description related to the service and one or more interactive elements, and wherein the response to the notification comprises a selection of the one or more interactive elements.

4. The method of any preceding claim, wherein the response comprises an indication of a user intent to implement the service.

5. The method of any preceding claim, wherein the information about the service comprises at least an indication that the service relates to forwarding communications and an identifier for a second UE to which the communications will be forwarded, wherein the identifier for the second UE comprises a phone number.

6. The method of any preceding claim, further comprising upon determining that the service is to be implemented, providing an update request, UR, message to a home subscriber server, HSS.

7. A computing device comprising:
one or more processors; and
one or more non-transitory computer-readable media storing computer-executable instructions that, when executed by the one or more processors, cause the computing device to perform operations comprising:
receive, from a first user equipment, a request to implement a service in relation to the first user equipment;
determine that the service relates to forwarding communications directed to the first user equipment to a second user equipment;
provide, to the first user equipment, a notification including information about the service;
receive, from the first user equipment, a response to the notification; and
make a determination about an implementation of the service based on the received response.

8. The computing device of claim 7, wherein the computing device comprises an application server configured to implement the service.

9. The computing device of claim 7 or 8, wherein the application server is implemented on an IMS network.

10. The computing device of any of claims 7 to 9, wherein the request is received from an authorization gateway associated with the first user equipment.

11. The computing device of any of claims 7 to 10, wherein the operations further comprise using one or more machine learning models to determine a likelihood of fraud associated with the request.

12. A user equipment, UE, comprising:
one or more processors; and
one or more non-transitory computer-readable media storing computer-executable instructions that, when executed by the one or more processors, cause the UE to perform operations comprising:
receive an indication of a request to be submitted in order to implement a service managed by an application server;
display, via a graphical user interface of the UE, a notification that includes information about the service;
receiving input from a user in relation to the notification; and
based on the input received from the user, submitting the request to implement the service.

13. The UE of claim 12, wherein the notification is displayed via an application that is executed on the UE, wherein:
the application is executed on the UE upon determining that the service managed by the application server is a communication forwarding service; and/or
the application comprises a browser application configured to access a website.

14. The UE of claim 12 or 13, wherein the indication of the request to be submitted is received upon a detection of an MMI code to be submitted to a network.

15. The UE of claim 14, wherein the MMI code is identified based on a format of information to be submitted to the network.
